Europäisches Patentamt

European Patent Office

Office européen des brevets

(19)

(11) Numéro de publication: **0 105 043**

**A1**

## (12) DEMANDE DE BREVET EUROPEEN

(21) Numéro de dépôt: 83870083.9

(22) Date de dépôt: 25.08.83

(51) Int. Cl.³: **B 62 D 53/02**
**A 01 B 51/02**

(30) Priorité: 01.09.82 BE 505249

(43) Date de publication de la demande:
04.04.84 Bulletin 84/14

(84) Etats contractants désignés:
AT DE FR GB IT LU NL

(71) Demandeur: Dutrieux, Jean
Place Molenbaix, 58C
B-7564 Molembaix(BE)

(71) Demandeur: COCKERILL SAMBRE
Quai Greiner, 1
B-4100 Seraing(BE)

(72) Inventeur: Dutrieux, Jean Camille
Place Molenbaix, 58C
B-7564 Molenbaix(BE)

(72) Inventeur: Tasset, Gérard Albert
rue des Fauvettes, 21
B-6001 Marcinelle(BE)

(74) Mandataire: Hamende, Noel
Cockerill Sambre S.A. quai Greiner 1
B-4100 Seraing(BE)

(54) Machine agricole polyvalente.

(57) Machine agricole polyvalente, particulièrement adaptée au transport et à la manutention, essentiellement caractérisée en ce qu'elle comporte au moins deux châssis indépendants (1,2) comportant chacun au moins un train de roues (7,8), reliés au moyen d'au moins une articulation (3) simple ou non; au moins un moyen de transport (4) des produits fixés sur un châssis et au moins un dispositif (6) apte à rendre le ou les moyens de transport précités mobiles; au moins un moteur agissant sur au moins un des trains de roues; des moyens de conduite et de commande éventuellement rassemblés dans une cabine (9), le rapport entre le poids total en charge et le poids à vide est supérieur à 4; des dispositifs rendent la machine apte à recevoir des accessoires de travail à ses deux extrémités.

FIG. 1

EP 0 105 043 A1

- 1 -

## MACHINE AGRICOLE POLYVALENTE

La présente invention a trait à une machine agricole polyvalente, destinée plus particulièrement à être utilisée dans les entreprises agricoles de petite ou moyenne importance.

La mécanisation de l'agriculture a eu pour effet de développer des machines qui assistent l'homme dans ses travaux.

Un des problèmes qui s'est posé est la diversité de ces travaux et donc la multiplicité des machines nécessaires pour les accomplir.

De cela sont nées les machines polyvalentes, dont la plus utilisée est le tracteur. Il est en effet possible de l'utiliser pour accomplir un grand nombre de travaux en y fixant des accessoires amovibles (par exemple des socs, des herses, des effeuilleuses, débardeuses, grues, bacs chargeurs, ....).

Toutefois en ce qui concerne les exploitations de petites et moyennes dimensions, les investissements en matériel sont une lourde charge et les limites financières imposées vite atteintes.

Après étude des problèmes de manutention mécanique dans ce type d'entreprise, il s'est avéré que l'outil le plus perforant est le tracteur agricole.

Cependant, il a été aussi constaté qu'un problème crucial résidait dans la manutention avec possibilité de transport de grande capacité.

Aussi paradoxal que cela paraisse, ce problème reste entier car l'utilisation d'une plateforme sur roue qui est remorquée par le tracteur ne résoud rien. On sait par expérience que ce type d'attelage présente les inconvénients suivants :

- maniabilité faible et encombrement fort important allant de pair,

- la direction de l'attelage repose sur les roues avant directrices du tracteur, celles-ci sont par conception plus petites

- 2 -

que les roues motrices, et de ce fait assurent une direction moins aisée de l'ensemble,

- le rapport poids en charge/poids à vide de l'attelage est très faible, au plus égal à 2 ou 3,
- la disposition moteur - cabine de commande, choix des roues motrices de diamètre plus grand que les roues directrices lors de la construction du tracteur, ont pour effet que celui-ci est fort mal adapté au transport ou à la manutention.

La machine agricole de l'invention a été conçue principalement en étudiant les problèmes précités et en cherchant à y remédier.

La machine agricole polyvalente, objet de la présente invention, est essentiellement caractérisée en ce qu'elle présente les particularités suivantes :

a. elle comporte

- au moins deux châssis indépendants, comportant chacun au moins un train de roues, reliés au moyen d'au moins une articulation simple ou non,
- au moins un moyen de transport des produits fixés sur un châssis et au moins un dispositif apte à rendre le ou les moyens de transport précités mobiles,
- au moins un moteur agissant sur au moins un des trains de roues ,
- des moyens de conduite et de commande, éventuellement rassemblés dans une cabine,

b. le rapport entre le poids total en charge

- y compris le ou les moyens de transport - et le poids à vide du même ensemble est supérieur à 4.

Suivant une première modalité de réalisation de la machine agricole polyvalente de l'invention, elle comporte à une ou aux deux extrémités, des dispositifs aptes à recevoir des accessoires de travail.

Suivant une seconde modalité de réalisation de la machine agricole polyvalente de l'invention, au moins un des châssis est du type tubulaire.

- 3 -

Suivant une autre modalité de réalisation de la machine agricole polyvalente suivant l'invention, les roues des ponts les plus proches du centre de gravité du moyen de transport précité sont de même diamètre ou plus petites que les autres roues.

Suivant encore une autre modalité de réalisation de la machine agricole polyvalente de la présente invention, la partie transporteuse peut être tirée ou poussée, et ce occasionnellement ou en continu.

Il résulte de la modalité précédente qu'un des avantages particuliers dont peut éventuellement bénéficier la machine est qu'il n'y a pas de sens particulier de marche de travail.

Suivant une cinquième modalité de réalisation de la machine agricole polyvalente de l'invention, la cabine de commande est orientable et peut se déplacer aussi bien horizontalement que verticalement.

Suivant une modalité de réalisation préférentielle de la machine agricole polyvalente de l'invention, celle-ci comporte :

- deux châssis indépendants tubulaires reliés par une articulation double,
- chaque châssis repose sur un pont comportant deux roues,
- une trémie repose sur un des châssis et peut être déplacée au moyen de deux potences sur lesquelles agissent des vérins et une cabine de conduite repose sur l'autre châssis, lequel supporte les éléments moteurs.
- les roues supportant la trémie sont de diamètre inférieur aux roues supportant l'autre châssis,
- une prise de force et de fixation est prévue à l'extrémité la plus proche de la cabine et éventuellement une autre est prévue à l'autre extrémité.

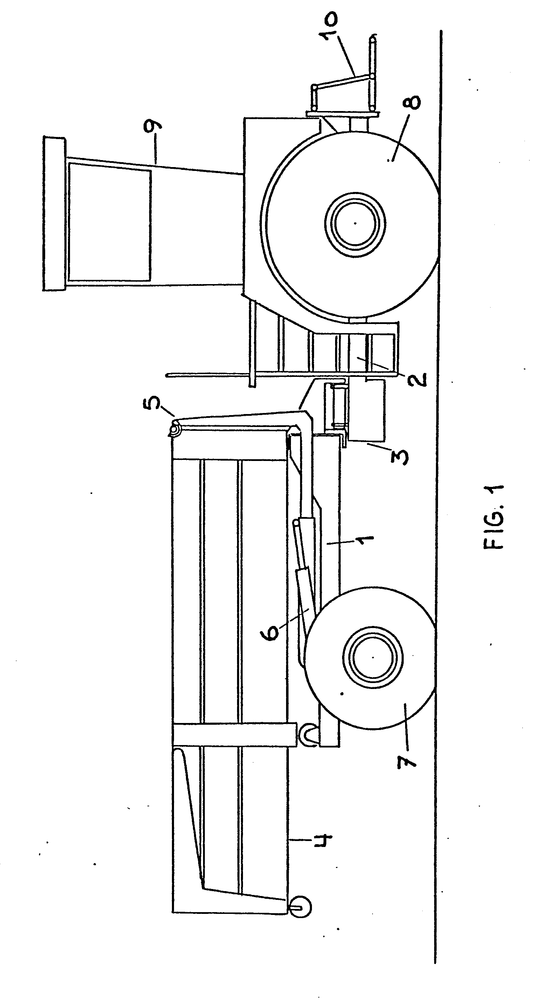

La figure 1 illustre à titre d'exemple non limitatif une modalité de réalisation de la machine agricole polyvalente de l'invention.

On y distingue les deux châssis indépendants (1) et (2), l'articulation (3), la trémie (4), les potences (5) de manutention de la trémie (4), sur lesquelles agissent les vérins (6), les roues (7) supportant la trémie (4) étant de diamètre inférieur aux roues (8) supportant la cabine (9) et les éléments moteurs non représentés, et enfin une prise (10) de force et de fixation d'accessoires.

- 5 -

REVENDICATIONS DU BREVET

--------------------------------

1. Machine agricole polyvalente caractérisée en ce qu'elle présente les particularités suivantes :
   a. elle comporte
      - au moins deux châssis indépendants, comportant chacun au moins un train de roues, reliés au moyen d'au moins une articulation simple ou non,
      - au moins un moyen de transport des produits fixés sur un châssis et au moins un dispositif apte à rendre le ou les moyens de transport précités mobiles,
      - au moins un moteur agissant sur au moins un des trains de roues,
      - des moyens de conduite et de commande éventuellement rassemblés dans une cabine,
   b. le rapport entre le poids total en charge
      - y compris le ou les moyens de transport - et le poids à vide du même ensemble est supérieur à 4.

2. Machine agricole polyvalente suivant la revendication 1, caractérisée en ce qu'elle comporte à une ou aux deux extrémités, des dispositifs aptes à recevoir des accessoires de travail.

3. Machine agricole polyvalente suivant les revendications 1 ou 2, caractérisée en ce qu'au moins un des châssis est du type tubulaire.

4. Machine agricole polyvalente suivant les revendications 1, 2 ou 3 caractérisée en ce que les roues des ponts les plus proches du centre de gravité du moyen de transport précité sont de même diamètre ou plus petites que les autres roues.

5. Machine agricole polyvalente suivant une ou plusieurs des revendications 1 à 4, caractérisée en ce que la partie transporteuse peut être tirée ou poussée, et ce occasionnellement ou en continu.

6. Machine agricole polyvalente suivant une ou plusieurs des revendications 1 à 5, caractérisée en ce que la cabine de commande est orientable et peut se déplacer aussi bien horizontalement que verticalement.

7. Machine agricole polyvalente suivant l'une ou l'autre des revendications 1 à 6, caractérisée en ce que celle-ci comporte :
   - deux châssis indépendants tubulaires reliés par une articulation double,
   - chaque châssis repose sur un pont comportant deux roues,
   - une trémie repose sur un des châssis et peut être déplacée au moyen de deux potences sur lesquelles agissent des vérins et une cabine de conduite repose sur l'autre châssis, lequel supporte les éléments moteurs,
   - les roues supportant la trémie sont de diamètre inférieur aux roues supportant l'autre châssis,
   - une prise de force et de fixation est prévue à l'extrémité la plus proche de la cabine et éventuellement, une autre est prévue à l'autre extrémité.

FIG. 1

**Office européen
des brevets**

**RAPPORT DE RECHERCHE EUROPEENNE**

EP  83  87  0083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-4 130 209  (S.M. MONONEN) <br> * Colonne 3, lignes 9-18; colonne 4, ligne 34 - colonne 5, ligne 50; colonne 6, lignes 46-53; colonne 7, lignes 34-67; figures 1, 4 * <br><br> --- | 1-5,7 | B 62 D   53/02 <br> A 01 B   51/02 |
| A | US-A-4 099 733  (A.I. AHONEN) <br><br> *  Colonne 1, ligne 46 - colonne 2, ligne 21; colonne 5, ligne 10 - colonne 6, ligne 54; figure 1 * <br><br> ----- | 1,4,5, 7 | |

**DOMAINES TECHNIQUES RECHERCHES (Int. Cl. ³)**

A 01 B   51/00
B 62 D   21/18
B 62 D   53/02

Le présent rapport de recherche a été établi pour toutes les revendications

| Lieu de la recherche <br> BERLIN | Date d'achèvement de la recherche <br> 23-11-1983 | Examinateur <br> BERGZOLL M C |
|---|---|---|